# EUROPÄISCHE PATENTANMELDUNG

(11) **EP 2 782 178 A1**
(43) Veröffentlichungstag der Anmeldung: **24.09.2014**
(21) Anmeldenummer: 13159869.0
(22) Anmeldetag: 19.03.2013
(51) Int. Cl.: H01M 8/02, H01M 8/04, H01M 8/10

(54) **Verfahren und System zur Erkennung von Undichtigkeiten in Kühleinheiten eines Brennstoffzellenstapels**

(71) Anmelder: Siemens Aktiengesellschaft, 80333 München (DE)
(72) Erfinder: Brandt, Torsten, 91301 Forchheim (DE); Braunecker, Michael, 90491 Nürnberg (DE); Karbacher, Stefan, 91325 Adelsdorf (DE); Lochner, Torsten, 91315 Höchstadt (DE); Stühler, Walter, 96114 Hirschaid (DE)

(57) **Zusammenfassung**

Leckagen an Kühleinheiten im Brennstoffzellenstapel werden einfach und zuverlässig festgestellt mittels Verfahren zur Erkennung von Undichtigkeiten in zwischen Elektrolyt-Elektrodeneinheiten (10a, 10b, 10c) angeordneten Kühleinheiten (2a, 2b) eines Brennstoffzellenstacks (3), wobei jede Kühleinheit (2a, 2b) aus zwei sich an Kontaktflächen berührenden Platten gebildet ist, wobei zwischen den beiden Platten (4, 6) ein Kühlmittelraum (8) für ein Kühlmittel und zwischen jeder Platte (4, 6) und der jeweils benachbarten Elektrolyt-Elektrodeneinheit (10a, 10b, 10c) ein Gasraum (12, 14) für ein Gas gebildet ist, bei dem:
- in einem ersten Schritt die Sauerstoffzufuhr und in einem zweiten Schritt die Wasserstoffzufuhr zu den Gasräumen (12, 14) unterbrochen wird,
- Luft in den Kühlmittelraum (8) hineingeleitet wird, und
- eine Spannung zwischen zwei Kühleinheiten (2a, 2b) gemessen wird.

## Beschreibung

Die Erfindung betrifft ein Verfahren sowie ein System zur Erkennung von Undichtigkeiten in zwischen Elektrolyt-Elektrodeneinheiten angeordneten Kühleinheiten eines Brennstoffzellenstapels.

Beim Betrieb einer Brennstoffzellenanlage wird üblicherweise einem aus gestapelten Brennstoffzellen gebildeten Brennstoffzellenblock zur Erzeugung elektrischen Stroms anodenseitig ein Brenngas, beispielsweise Wasserstoff, und kathodenseitig Luft oder Sauerstoff als weiteres Reaktionsgas zugeführt. Es gibt eine Vielzahl von unterschiedlichen Arten von Brennstoffzellenanlagen, die sich im Hinblick auf ihren Aufbau, im Hinblick auf die verwendeten Elektrolyte sowie im Hinblick auf die notwendige Betriebstemperatur unterscheiden. Bei einer sogenannten PEM-Brennstoffzelle (PEM = proton exchange membrane) ist zwischen einer gasdurchlässigen Anode und einer gasdurchlässigen Kathode eine Polymermembran angeordnet, die für Wasserstoffprotonen durchlässig ist. Da eine einzige Brennstoffzelle eine Spannung von lediglich etwa 0,7 bis 0,9 Volt liefert, sind mehrere Brennstoffzellen elektrisch in Serie zu einem Stapel miteinander verbunden. Die einzelnen Brennstoffzellen sind hierbei üblicherweise durch eine Separatorplatte voneinander getrennt. Die Separatorplatte weist hierbei i.d.R. eine Art Rillenstruktur auf und liegt an der Anode bzw. an der Kathode an. Durch die Rillenstruktur ist ein Gasraum zwischen der Separatorplatte und der Anode bzw. der Kathode gebildet, durch den die Reaktionsgase strömen.

Eine derartige Separatorplatte, die auch Bipolarplatte genannt wird, aufgrund ihrer Funktion weiter im Text jedoch als Kühleinheit bezeichnet wird, ist aus der EP 0 876 686 B1 bekannt. Die Kühleinheit ist zwischen zwei Elektrolyt-Elektrodeneinheiten zweier Brennstoffzellen angeordnet. Die Kühleinheit trennt drei Strömungsräume voneinander, nämlich einen an der Anode einer ersten Elektrolyt-Elektrodeneinheit grenzenden ersten Gasraum, einen an der Kathode einer zweiten Elektrolyt-Elektrodeneinheit grenzenden zweiten Gasraum und mittig einen Kühlmittelraum für ein flüssiges Kühlmittel. Der Kühlmittelraum ist dabei durch zwei aufeinander liegende Platten der Kühleinheit begrenzt.

Leckagen an solchen Kühleinheiten konnten bisher nur im Betrieb (wenn der Druck des Kühlmittels, insbesondere ein Kühlwasserdruck, größer als der Gasdruck im Gasraum ist) als Zellspannungseinbruch oder alternativ durch eine Dichtigkeitsmessung und Zerlegung des Brennstoffzellenstapels in Teilstapel mit Dichtigkeitsmessung lokalisiert werden.

Der Erfindung liegt die Aufgabe zugrunde, einfach und zuverlässig Leckagen an Kühleinheiten im Brennstoffzellenstapel festzustellen.

Die Aufgabe wird erfindungsgemäß gelöst durch ein Verfahren zur Erkennung von Undichtigkeiten in zwischen Elektrolyt-Elektrodeneinheiten angeordneten Kühleinheiten eines Brennstoffzellenstacks, wobei jede Kühleinheit aus zwei sich an Kontaktflächen berührenden Platten gebildet ist, wobei zwischen den beiden Platten ein Kühlmittelraum für ein Kühlmittel und zwischen jeder Platte und der jeweils benachbarten Elektrolyt-Elektrodeneinheit ein Gasraum für ein Gas gebildet ist, bei dem:
- in einem ersten Schritt die Sauerstoffzufuhr und in einem zweiten Schritt die Wasserstoffzufuhr zu den Gasräumen unterbrochen wird, so dass ein Wasserstoff-Überschuss vorliegt,
- Luft in den Kühlmittelraum hineingeleitet wird, und
- eine Spannung zwischen zwei Kühleinheiten gemessen wird.

Die Aufgabe wird weiterhin erfindungsgemäß gelöst durch ein entsprechendes System zur Erkennung von Undichtigkeiten in zwischen Elektrolyt-Elektrodeneinheiten angeordneten Kühleinheiten eines Brennstoffzellenstacks, wobei jede Kühleinheit aus zwei sich an Kontaktflächen berührenden Platten gebildet ist, wobei zwischen den beiden Platten ein Kühlmittelraum für ein Kühlmittel und zwischen jeder Platte und der jeweils benachbarten Elektrolyt-Elektrodeneinheit ein Gasraum für ein Gas gebildet ist, umfassend
- Mittel zur Unterbrechung der Gaszufuhr in die Gasräume, wobei ein Wasserstoff-Überschuss eingestellt wird,
- eine Vorrichtung zum Einleiten von Luft in den Kühlmittelraum, sowie
- ein Spannungsmesser zum Messen einer Spannung zwischen zwei Kühleinheiten.

Die in Bezug auf das Verfahren nachstehend aufgeführten Vorteile in bevorzugten Ausgestaltungen lassen sich sinngemäß auf das System übertragen.

Die Erfindung basiert auf der Erkenntnis, dass ein restliches Gasgemisch, welches nach dem Abschalten eines Brennstoffzellenstapels sich in den Gasräumen seitlich der Kühleinheiten noch befindet, zur Feststellung einer Undichtigkeit einer Kühleinheit benutzt werden kann. Brennstoffzellenmodule mit metallischen Kühleinheiten werden aus Korrosionsschutzgründen in der Regel mit Wasserstoff-Überschuss abgeschaltet. Dieser Vorgang ist ausführlich in der EP 0 914 685 A1 beschrieben. Da zuerst der Sauerstoff verbraucht wird, diffundiert Wasserstoff durch die PEM in den kathodenseitigen Gasraum. Somit befindet sich in beiden Gasräumen seitlich von einer Kühleinheit nach dem Abschalten des Brennstoffzellenmoduls noch ein Wasserstoff-Stickstoff-Gemisch.

Wenn eine Kühleinheit eine Leckagestelle zu einem Gasraum hin aufweist und in den Kühlmittelraum dieser Kühleinheit Luft hineingeleitet wird, dringt die Luft durch die Leckagestelle in den entsprechenden Gasraum. Der Sauerstoff der Luft reagiert dabei mit dem im Gasraum vorhandenen Wasserstoff, so dass der Wasserstoff verbraucht wird, und es baut sich an der defekten Brennstoffzelle ein messbares Potential auf. Dieses Potential wird durch die Spannungsmessung zwischen der defekten Kühleinheit und einer weiteren Kühleinheit, vorzugsweise einer benachbarten Kühleinheit, detektiert. Dabei gibt es zwei mögliche Fälle: bei einer kathodenseitigen Leckage liegt im kathodenseitigen Gasraum Sauerstoff und im anodenseitigen Gasraum Wasserstoff vor, dann wird eine positive Spannung gemessen; im Falle einer anodenseitigen Leckage ist im kathodenseitigen Gasraum (wegen dem Wasserstoff-Überschuss) noch Wasserstoff vorhanden während der anodenseitige Gasraum mit Sauerstoff ausgefüllt ist, dann wird eine negative Spannung erfasst.

Das oben beschriebene Verfahren zur Erkennung von Undichtigkeiten in den Kühleinheiten eines Brennstoffzellenstapels weist eine Reihe von Vorteilen auf. Zunächst liegt eine große Zeitersparnis bei der Suche nach einer undichten Kühleinheit in einem Brennstoffzellenstapel vor. Darüber hinaus ist das Verfahren mit minimalem Montage- bzw. Demontageaufwand des Brennstoffzellenstapels verbunden, da die defekte Kühleinheit detektiert wird und der Stapel lediglich an der defekten Stelle geöffnet wird. Ein weiterer Vorteil liegt darin, dass das Verfahren sowohl mit undichten Stellen zur Sauerstoffseite als auch zur Wasserstoffseite funktioniert, es werden somit beide Leckagemöglichkeiten gleichzeitig geprüft.

Eine bessere Lokalisierung der Leckage erfolgt gemäß einer bevorzugten Ausführungsvariante, indem das Vorzeichen der gemessenen Spannung im Hinblick auf eine Lokalisierung der Undichtigkeit berücksichtigt wird. Hierfür ist eine Analyseeinheit zum Analysieren des Vorzeichens der gemessenen Spannung vorgesehen. Wenn das bei der Messung der Spannung detektierte Potential positiv ist, liegt die undichte Stelle der Kühleinheit an der Platte zur Kathodenseite hin. Wenn das ermittelte Potential wiederum negativ ist, ist die Leckage an der Platte zwischen dem Kühlmittelraum und dem anodenseitigen Gasraum.

Gemäß einer weiteren bevorzugten Ausführungsvariante wird die Luft mit Überdruck, insbesondere mit einem Druck bis 2 bar, in den Kühlmittelraum hineingeleitet. Hierfür ist ein Verdichter vorgesehen, der den Druck der Luft erhöht, die nach dem Abschalten des Brennstoffzellenstapels in den Kühlmittelraum eingeleitet wird. Dadurch strömt die Luft mit hoher Geschwindigkeit aus dem Kühlmittelraum in den benachbarten Gasraum, wenn an einer der Platten der Kühleinheit ein Loch ist, so dass die Leckage nach nur kurzer Zeit detektierbar ist.

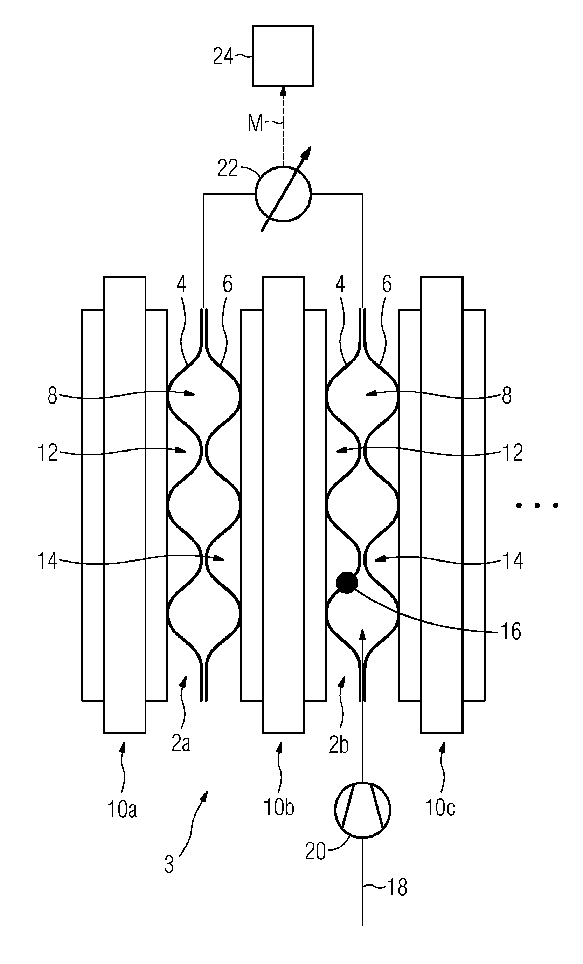

Ein Ausführungsbeispiel der Erfindung wird anhand einer Zeichnung näher erläutert. Hierin zeigt die einzige Figur schematisch einen Schnitt durch einen Brennstoffzellenstapel mit einer Anordnung zur Erkennung von Undichtigkeiten an einer Kühleinheit.

In der Figur sind zwei Kühleinheiten 2a, 2b dargestellt, die Teil eines Brennstoffzellenstapels 3 sind. Die Kühleinheiten 2a, 2b setzen sich jeweils aus zwei profilierten Platten 4, 6 zusammen, wobei zwischen den Platten 4, 6 ein Kühlmittelraum 8 ausgebildet ist. Beidseitig liegt jede Kühleinheit 2a, 2b auf jeweils einer Elektrolyt-Elektrodeneinheit 10a, 10b, 10c auf. Aufgrund der Profilierung der Platten 4, 6 sind zwischen der Kühleinheit 2a, 2b und der jeweiligen Elektrolyt-Elektrodeneinheit 10a, 10b, 10c ebenfalls Gasräume 12, 14 ausgebildet. Im gezeigten Ausführungsbeispiel wird der Gasraum 12 im Betrieb des Brennstoffzellenstapels 3 mit Sauerstoff ausfüllt (kathodenseitiger Gasraum) und der Gasraum 14 (anodenseitiger Gasraum) mit Wasserstoff.

Eine undichte Stelle an der Kühleinheit 2b ist in der Figur symbolisch durch den Punkt 16 dargestellt. Zur Erkennung der undichten Stelle 16 wird der Brennstoffzellenstapel 3 abgeschaltet, wobei zunächst die Sauerstoffzufuhr zum Gasraum 12 und anschließend die Wasserstoffzufuhr zum Gasraum 14 z.B. über nicht hier gezeigte Ventile unterbrochen wird. Dies hat zur Folge, dass nach dem Abschalten des Brennstoffzellenstapels 3 Überschuss an Wasserstoff vorliegt, der sich sowohl im anodenseitigen Gasraum 14 als auch im kathodenseitigen Gasraum 12 befindet.

Als nächstes wird der Kühlmittelraum 8 über eine Leitung 18 mit Druckluft beaufschlagt. Zum Erhöhen des Drucks der Luft ist hierbei ein Verdichter 20 vorgesehen, der in der Leitung 18 integriert ist. Wenn dabei Luft aus dem Kühlmittelraum 8 durch die undichte Stelle 16 in den Gasraum 12 der Kühleinheit 2b eindringt, reagiert der Sauerstoff in der Luft mit dem im Gasraum 12 vorhandenen Wasserstoff, so dass sich ein messbares Potential aufbaut (wenn der Wasserstoff verbraucht wird, bildet sich Potential aus, da an der einen Seite Sauerstoff und an der anderen Seite Wasserstoff-Überschuss vorliegt). Zur Erfassung dieses Potentials ist ein Spannungsmesser 22 vorgesehen, der die elektrische Spannung zwischen beiden Kühleinheiten 2a, 2b misst. Ein Messsignal M des Spannungsmessers 22 wird zu Auswertung einer Analyseeinheit 24 zugeführt.

Da die Leckagestelle 16 zur Sauerstoffseite hin ist, wird im gezeigten Ausführungsbeispiel eine positive Spannung z.B. in der Größenordnung von 0,85 Volt gemessen. Wenn die gemessene Spannung jedoch ein negatives Vorzeichen aufweist, ist dies ein Indiz dafür, dass die Kühleinheit zur Wasserstoffseite hin undicht ist.

Das oben beschriebene Verfahren eignet sich zur Erkennung und Lokalisierung von Leckagen einer Kühleinheit 2b außerhalb des Betriebs des Brennstoffzellenstapels 3. Das Verfahren ist dabei mit minimalem Montage- und Demontageaufwand des Brennstoffzellenstapels verbunden, da sobald die defekte Kühleinheit 2b detektiert wird, nur diese defekte Kühleinheit 2b vom Brennstoffzellenstapel 3 entfernt wird.

## Patentansprüche

1. Verfahren zur Erkennung von Undichtigkeiten in zwischen Elektrolyt-Elektrodeneinheiten (10a, 10b, 10c) angeordneten Kühleinheiten (2a, 2b) eines Brennstoffzellenstacks (3), wobei jede Kühleinheit (2a, 2b) aus zwei sich an Kontaktflächen berührenden Platten (4, 6) gebildet ist, wobei zwischen den beiden Platten (4, 6) ein Kühlmittelraum (8) für ein Kühlmittel und zwischen jeder Platte (4, 6) und der jeweils benachbarten Elektrolyt-Elektrodeneinheit (10a, 10b, 10c) ein Gasraum (12, 14) für ein Gas gebildet ist, bei dem:
- in einem ersten Schritt die Sauerstoffzufuhr und in einem zweiten Schritt die Wasserstoffzufuhr zu den Gasräumen (12, 14) unterbrochen wird,
- Luft in den Kühlmittelraum (8) hineingeleitet wird, und
- eine Spannung zwischen zwei Kühleinheiten (2a, 2b) gemessen wird.

2. Verfahren nach Anspruch 1,
wobei das Vorzeichen der gemessenen Spannung im Hinblick auf eine Lokalisierung der Undichtigkeit berücksichtigt wird.

3. Verfahren nach Anspruch 1 oder 2,
wobei die Luft mit Überdruck, insbesondere mit einem Druck bis 2 bar, in den Kühlmittelraum (8) hineingeleitet wird.

4. System zur Erkennung von Undichtigkeiten in zwischen Elektrolyt-Elektrodeneinheiten (10a, 10b, 10c) angeordneten Kühleinheiten (2a, 2b) eines Brennstoffzellenstacks (3), wobei jede Kühleinheit (2a, 2b) aus zwei sich an Kontaktflächen berührenden Platten (4, 6) gebildet ist, wobei zwischen den beiden Platten (4, 6) ein Kühlmittelraum (8) für ein Kühlmittel und zwischen jeder Platte (4, 6) und der jeweils benachbarten Elektrolyt-Elektrodeneinheit (10a, 10b, 10c) ein Gasraum (12, 14) für ein Gas gebildet ist, umfassend
- Mittel zur Unterbrechung der Gaszufuhr zu den Gasräumen (12, 14),
- eine Vorrichtung (20) zum Einleiten von Luft in den Kühlmittelraum (8), sowie
- ein Spannungsmesser (22) zum Messen einer Spannung zwischen zwei Kühlplatten (4, 6).

5. System nach Anspruch 4,
umfassend eine Analyseeinheit (24) zum Analysieren des Vorzeichens der gemessenen Spannung im Hinblick auf eine Lokalisierung der Undichtigkeit.

6. System nach Anspruch 4 oder 5,
wobei die Vorrichtung (20) zum Einleiten von Luft ein Verdichter ist, der insbesondere zum Verdichten der Luft auf einen Druck bis 2 bar ausgebildet ist.
